# EUROPÄISCHE PATENTSCHRIFT

(11) **EP 1 826 034 B1**
(45) Veröffentlichungstag und Bekanntmachung des Hinweises auf die Patenterteilung: **01.12.2010**
(21) Anmeldenummer: 07003387.3
(22) Anmeldetag: 19.02.2007
(51) Int. Cl.: B60G 17/015, B60G 17/0185, B60G 17/052

(54) **Luftfederungseinrichtung für ein Kraftfahrzeug mit Luftfederbälgen**
Suspension device for a motor vehicle with air-suspension bellows
Dispositif d'amortissement pneumatique pour véhicule automobile doté de soufflets

(30) Priorität: 22.02.2006 DE 102006008158
(43) Veröffentlichungstag der Anmeldung: 29.08.2007
(73) Patentinhaber: Haldex Brake Products GmbH, 69123 Heidelberg (DE)
(72) Erfinder: Sulzyc, Georg, 69168 Wiesloch (DE)
(74) Vertreter: Rehberg Hüppe + Partner

(56) Entgegenhaltungen:
- WO-A-2005/049346
- DE-A1- 4 309 695
- DE-A1- 10 232 554
- DE-C1- 19 944 873

## Beschreibung

### TECHNISCHES GEBIET DER ERFINDUNG

Die Erfindung betrifft eine Luftfederungseinrichtung für ein Kraftfahrzeug mit Luftfederbälgen mit den im Oberbegriff des Patentanspruchs 1 angegebenen Merkmalen.

### STAND DER TECHNIK

Eine Luftfederungseinrichtung der eingangs beschriebenen Art ist aus der DE 102 32 554 A1 bekannt. Es ist zunächst ein Magnetventil für Nutzfahrzeuge mit Luftfederung vorgesehen, dessen Anker druckentlastet ausgebildet ist. Zum willkürlichen Betätigen des zwischen dem Ventilkörper und dem Ventilsitz gebildeten Ventils ist ein manuell betätigbarer Stößel vorgesehen, der entweder getrennt zum Anker und mit Abstand zu diesem separat gelagert ist oder direkt mit dem Anker verschraubbar ist, so dass er jede Bewegung des Ankers auch bei elektrischer Betätigung des Magnetventils mitmacht. Um eine ordnungsgemäße Schließfunktion des Ventils durch die Führung des Stößels nicht zu beeinträchtigen ist in einer Ausführungsform vorgesehen, den Stößel einerseits und den Ventilkörper andererseits als voneinander getrennte Bauteile am Magnetventil anzuordnen. Dies ist von besonderer Bedeutung bei großquerschnittig ausgebildeten Magnetventilen, also solchen Magnetventilen, deren Anker entsprechend dem Durchmesser des Ventilsitzes druckentlastet ausgebildet ist. Es ist auch Luftfederungseinrichtung für ein Kraftfahrzeug mit Luftfederbälgen gezeigt und beschrieben, mit einer elektronisch gesteuerten Niveauregelungseinrichtung, welche über eine elektrisch betätigbare Ventileinrichtung bei Bedarf ein Belüften oder Entlüften der Luftfederbälge bewirkt, mit zwei in Reihe geschalteten Magnetventilen und mit zwei, den Magnetventilen zugeordneten manuellen Betätigungselementen, durch deren willkürliche manuelle Betätigung auch bei fehlender Stromversorgung der elektronisch gesteuerten Niveauregeleinrichtung eine willkürliche Belüftung oder Entlüftung der Luftfederbälge durchführbar ist, wobei jedes Betätigungselement gegenüber den Ankern mechanisch ungekoppelt über einen Hub frei bewegbar angeordnet ist und der Hub jedes Betätigungselements so bemessen und positioniert ist, dass er einen Teil des Bewegungswegs des jeweiligen Ankers überdeckt oder unmittelbar im Anschluss an den Bewegungsweg des jeweiligen Ankers beginnt. Die zwei Magnetventile der elektrisch betätigbaren Ventileinrichtung weisen als Ventilkörper ausgebildete oder damit verbundene Anker auf, die mit einer Dichtung verschieblich im Gehäuse geführt sind. Das erste Magnetventil der zwei in Reihe geschalteten Magnetventile ist als 3/2-Wege-Magnetventil mit Entlüftungsanschluss ausgebildet, während das zweite Magnetventil als 2/2-Wegeventil ausgebildet ist. Diese Ausbildung weist eine große Anzahl von Dichtungen auf, die noch zusätzlich aufeinander abgestimmt sein müssen, so dass eine entsprechend präzise Toleranzenverwirklichung unabdingbar ist. Die manuelle Betätigung der Betätigungsknöpfe bei unterbrochener Stromversorgung ist nicht einfach und sinnfällig, weil zum Heben beide Betätigungsknöpfe gedrückt gehalten werden müssen, während zum Senken nur der Betätigungsknopf des zweiten Magnetventils gedrückt gehalten wird und die Entlüftung über das erste Magnetventil mit seinem Entlüftungsanschluss erfolgt. Beim elektrisch gesteuerten Heben ergibt sich ein erhöhter Stromverbrauch, das beide Magnetventile umgesteuert werden müssen. Weiterhin ist nachteilig, dass beim elektrisch und beim manuell gesteuerten Heben nach dem Öffnen des Einlassventils und vor dem nachfolgenden Schließen des Auslassventils ein unnötiger Luftverbrauch an Vorratsluft stattfindet.

Eine weitere Luftfederungseinrichtung ist aus der DE 10 2004 035 691 A1 oder auch der DE 199 44 873 C1 bekannt. Die Luftfederungseinrichtung umfasst eine elektronisch gesteuerte Niveauregeleinrichtung, die ein elektronisches Steuergerät und eine von dieser elektrisch betätigbare Ventileinrichtung umfasst. Die Ventileinrichtung weist zwei elektromagnetisch betätigbare Ventile auf. Diese beiden Ventile sind in Reihe geschaltet. Das eine Ventil, welches als kombiniertes Einlass/Auslassventil fungiert, ist als 3/2-Wegeventil ausgebildet. Das andere Ventil, welches als Halteventil fungiert, ist ein 2/2-Wegeventil mit, einer Durchlass- und einer Sperrstellung. Mit Hilfe des elektronischen Steuergeräts und den beiden Wegeventilen der elektrisch betätigbaren Ventileinrichtung erfolgt bei Bedarf ein Belüften oder Entlüften der Luftfederbälge. Dies geschieht über Signale eines Wegsensors, der die vorgesehene Höhenlage des Fahrzeugaufbaus abtastet. Um bei fehlender Stromversorgung, beispielsweise bei einem an der Rampe abgestellten Anhänger, den Fahrzeugaufbau willkürlich heben oder absenken zu können, so dass eine Rampenanpassung möglich ist, sind zwei manuell betätigbare pneumatische Ventile parallel zu den beiden Magnetventilen vorgesehen, durch dessen willkürliche manuelle Betätigung auch bei fehlender Stromversorgung der elektronisch gesteuerten Niveauregeleinrichtung die willkürliche Belüftung oder Entlüftung der Luftfederbälge durchführbar ist.

Die aus der DE 10 2004 035 691 A1 oder auch der WO 2005/049346 A bekannte Luftfederungseinrichtung weist eine manuell betätigbare Ventileinrichtung auf, die ein pneumatisches 2/2-Wegeventil und ein pneumatisches 3/2-Wegeventil umfasst. Diese pneumatischen Wegeventile sind in einem parallelen Zweig zu den Wegeventilen der elektrisch betätigbaren Ventileinrichtung angeordnet. Es können Taster vorgesehen sein, die ein manuelles Betätigungselement darstellen und die entweder mit den pneumatischen Wegeventilen im Parallelzweig oder mit den Wegeventilen der elektrisch betätigbaren Ventileinrichtung mechanisch gekoppelt sind. Weiterhin kann eine Servoventileinrichtung zur Belüftung oder Entlüftung der Luftfederbälge vorgesehen sein. Die Servoventileinrichtung kann durch die elektrisch betätigbare Ventileinrichtung und durch die manuelle Betätigung des manuellen Betätigungselements betätigbar sein. Es ist nicht erkennbar, wie die Wegeventile, die mit dem manuellen Betätigungselement mechanisch gekoppelt sind, konstruktiv ausgebildet sind.

### AUFGABE DER ERFINDUNG

Der Erfindung liegt die Aufgabe zugrunde, eine Luftfederungseinrichtung der eingangs beschriebenen Art so weiterzubilden, dass sie einen besonders einfachen konstruktiven Aufbau hinsichtlich der elektrisch betätigbaren Ventileinrichtung aufweist, die eine hohe Funktionssicherheit sowohl bei elektrischer Betätigung als auch bei willkürlicher manueller Betätigung erbringt.

### LÖSUNG

Die Aufgabe der Erfindung wird erfindungsgemäß mit den Merkmalen des unabhängigen Patentanspruchs 1 gelöst.

### BESCHREIBUNG DER ERFINDUNG

Die Erfindung löst sich vom Einsatz pneumatischer Wegeventile, bei deren Verwirklichung nicht nur eine Kolbenanordnung mit einem über einen Magneten beaufschlagbaren Wirkraum geschaffen werden muss. Mit der Erfindung wird die elektrisch betätigbare Ventileinrichtung unmittelbar von zwei Magnetventilen gebildet. Die Anker der Magnetventile bilden dabei zugleich die Ventilkörper, so dass sich der konstruktive Aufwand gegenüber dem Stand der Technik erheblich verringert. Es ist dadurch nicht mehr erforderlich, das manuelle Betätigungselement in Form des Tasters mechanisch mit dem Ventilkörper des Wegeventils zu koppeln und insoweit die Gefahr von Dichtproblemen herbeizuführen. Jedes Betätigungselement wird vielmehr gegenüber den Ankern gerade mechanisch ungekoppelt über einen festgelegten Hub frei verschiebbar gehäuseseitig gelagert. Der Hub jedes Betätigungselements wird so bemessen und das Betätigungselement selbst so relativ zu dem Anker des Magnetventils positioniert, dass der Hub des Betätigungselements zumindest einen Teil des Bewegungswegs des jeweiligen Ankers des Magnetventils überdeckt oder unmittelbar im Anschluss an den Bewegungsweg des jeweiligen Ankers angeordnet ist. Die Anordnungsreihenfolge der beiden Magnetventile in dem von einem Vorratsbehälter zu einem Luftfederbalg führenden Kreis ist so festgelegt, dass das erste Magnetventil der zwei in Reihe geschalteten Magnetventile als 2/2-Wegeventil und das zweite Magnetventil als 3/2-Wege-Magnetventil mit Entlüftungsanschluss ausgebildet sind. Die zwei Magnetventile der elektrisch betätigbaren Ventileinrichtung weisen als Ventilkörper ausgebildete, von Ringräumen umgebene Anker auf, sind also im Gehäuse nicht mit einer Dichtung gelagert und geführt.

Die beiden Magnetventile sind an sich so ausgebildet, wie dies auch die pneumatischen Ventile des Stands der Technik grundsätzlich zeigen. Das eine der Magnetventile ist als 2/2-Wege-Magnetventil und das andere als 3/2-Wege-Magnetventil ausgebildet. Das 2/2-Wege-Magnetventil besitzt zwei Anschlüsse und zwei Stellungen, nämlich eine Sperrstellung und eine Durchgangsstellung. Das 3/2-Wege-Magnetventil besitzt zwei Anschlüsse für Leitungen und einen dritten Anschluss, der je nach Einsatz entweder mit der Atmosphäre als Entlüftung oder mit einer dritten Leitung verbunden ist. Auch dieses Magnetventil besitzt zwei Stellungen. In der einen Stellung ist die Entlüftung bzw. der Anschluss an den Vorrat abgesperrt, während die beiden anderen zum Luftfederbalg führenden Leitungen miteinander in Verbindung stehen. In der anderen Stellung ist es gerade umgekehrt.

In einer besonders einfachen Ausführungsform genügt es, das Betätigungselement separat von dem Anker des jeweiligen Magnetventils zu lagern und den Anker des Magnetventils gegen Federkraft mitzunehmen, um ein betreffendes Magnetventil manuell zu öffnen bzw. zu schließen. Eine andere Ausführungsmöglichkeit besteht darin, das Betätigungselement mit einem Sitz zu versehen, der mit dem Anker des betreffenden Magnetventils ein Ventil bildet. In diesem Falle müssen sich der Bewegungsweg des Ankers und der Hub des Betätigungselements nicht überdecken, sondern nur unmittelbar aneinander anschließen.

In einer besonders einfachen Ausführungsform kann jedes Betätigungselement als ein in einem gemeinsamen Gehäuse aufgehängter Stößel ausgebildet sein, der koaxial zur Achse des Ankers des jeweiligen Magnetventils verschiebbar gelagert ist. Ein solcher Stößel kann separat abgedichtet im gemeinsamen Gehäuse gelagert und auf eine Feder in eine Ruhestellung beaufschlagt sein. Er beeinflusst die Anordnung des Ankers und dessen Dichtfunktion mit den zugehörigen Sitzen des Magnetventils nicht nachteilig. Mit einer solchen Ausbildung wird zugleich die Anordnung paralleler Leitungszweige und paralleler pneumatischer Ventile entbehrlich. Auch eine zusätzliche Servoeinrichtung ist nicht erforderlich, da sowohl die elektrische Ansteuerung der Magnetventile wie auch deren manuelle willkürliche Betätigung ohne weiteres bei Bedarf möglich sind.

Die Anker der Magnetventile sind von Ringräumen umgeben. Die Ringräume der beiden Magnetventile sind über eine Verbindungsleitung dauerhaft miteinander verbunden. Die Verbindungsleitung stellt einen Teil der Leitung dar, die von einem Druckluftvorrat zu den Luftfederbälgen führt.

Für die Ausbildung des bzw. der Stößel, die den Magnetventilen zugeordnet sind, gibt es mehrere Möglichkeiten. In einer ersten Möglichkeit können die Stößel als einfache stangenförmige Körper, auf Rückführfedern gelagert, vorgesehen sein. Es ist auch möglich, die beiden Stößel durch eine Wippe oder eine sonstige gelenkige Verbindung miteinander zu koppeln, da die Belüftung und die Entlüftung eine im gewissen Sinne gegenläufige Betätigung erfordern. Es ist aber auch möglich, jeden Stößel separat von dem anderen Stößel auszubilden und anzuordnen.

Der dem Anker des jeweiligen Magnetventils zugeordnete Stößel kann aber auch einen Kanal aufweisen, der der Luftdurchführung dient. Jeder Stößel trägt einen Sitz, der Verbindung zu dem Kanal hat und der mit dem als Ventilkörper ausgebildeten Anker des jeweiligen Magnetventils entweder ein Einlassventil oder ein Auslassventil bildet, je nach der Anordnung und Schaltung. Der Stößel kann als Schieber mit zwei Dichtungen ausgebildet sein, wobei der Kanal den Raum zwischen den beiden Dichtungen mit dem Sitz verbindet. Dieser Raum ist entweder mit der Druckluftzufuhr oder mit der Entlüftung verbunden. Die Stößel der beiden Magnetventile können auch bei dieser Ausführungsform identisch ausgebildet sein. In allen Fällen besitzt jeder Stößel einen aus dem Gehäuse herausgeführten und herausragenden Betätigungsknopf für die willkürliche manuelle Betätigung, die vorzugsweise durch einen Drückvorgang bewirkt wird.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Ohne dass hierdurch der durch die Patentansprüche definierte Schutzbereich verändert werden soll, gilt für die Offenbarung das Folgende: Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt einen schematisierten Querschnitt durch die elektrisch betätigbare Ventil- einrichtung der Luftfederungseinrichtung in Form zweier Magnetventile.
- **Fig. 2**: zeigt eine weitere Ausführungsform der elektrisch betätigbaren Ventileinrichtung mit umgekehrter Anordnungsreihenfolge der Magnetventile.
- **Fig. 3**: zeigt eine weitere Ausführungsmöglichkeit der elektrisch und manuell betätig- baren Ventileinrichtung.

### FIGURENBESCHREIBUNG

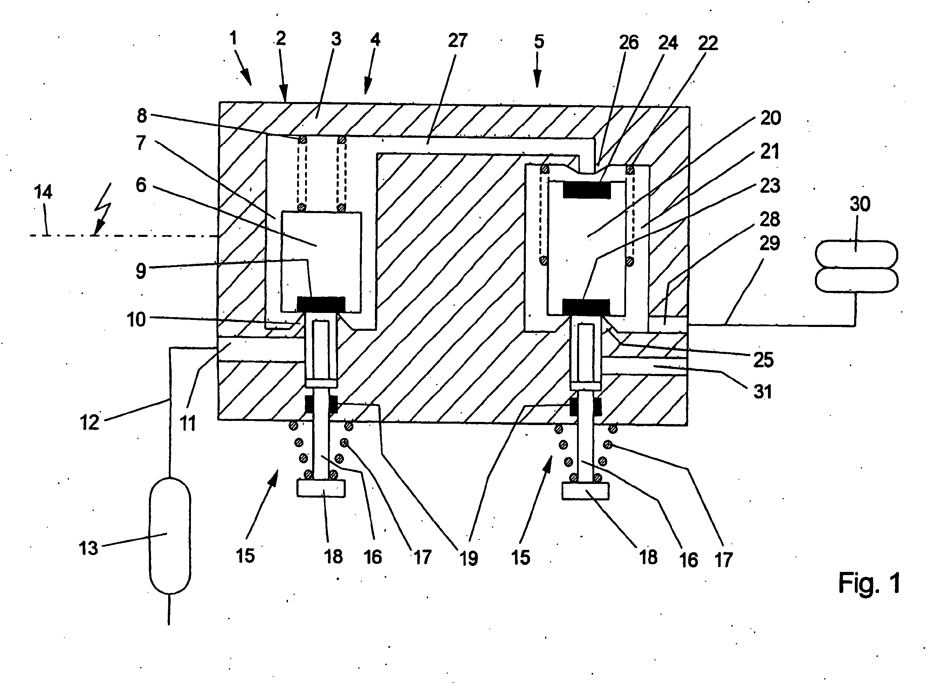

**Fig. 1** zeigt eine erste Ausführungsform der für die Erfindung wesentlichen Elemente der Luftfederungseinrichtung für ein Kraftfahrzeug mit Luftfederbälgen. Die Luftfederungseinrichtung weist eine elektrisch gesteuerte Niveauregeleinrichtung 1 auf, deren wesentliches Element, nämlich eine elektrisch betätigbare Ventileinrichtung 2, verdeutlicht ist. Es versteht sich, dass zu dieser Ventileinrichtung 2 auch eine elektronische Steuereinrichtung, ein Wegsensor, ein Drucksensor und dergleichen gehören, wie sie im Stand der Technik an sich bereits bekannt sind. Diese Elemente sind aus Übersichtlichkeitsgründen nicht dargestellt.

Die elektrisch betätigbare Ventileinrichtung 2 weist ein gemeinsames Gehäuse 3 auf. In dem Gehäuse 3 sind zwei Magnetventile 4, 5 in der dargestellten Weise untergebracht. Das Magnetventil 4 weist einen Anker 6 auf, der von einem Ringraum 7 umgeben ist. Der Anker ist auf einer Feder 8 abgestützt. Der Anker 6 bildet zugleich den Ventilkörper des Magnetventils 4. Er besitzt ein Dichtelement 9, dem ein am Gehäuse 3 ausgebildeter Ventilsitz 10 zugeordnet ist. Der Ventilsitz 10 hat dauerhaft Verbindung zu einem Anschluss 11, an den eine Leitung 12 herangeführt ist, die von einem Druckluftvorratsbehälter 13 ausgeht. Der als Ventilkörper fungierende Anker 6 des Magnetventils 4 kann über eine elektrische Steuerleitung 14 erregt werden. Die elektrische Steuerleitung 14 steht mit der nicht dargestellten elektronischen Steuereinrichtung in Verbindung. In Fig. 1 ist die nicht erregte Stellung des Magnetventils 4 dargestellt. Das Magnetventil 4 ist geschlossen, so dass der Durchgang zwischen dem Anschluss 11 und dem Ringraum 7 abgesperrt ist. Zugleich wird erkennbar, dass der Anker 6 des Magnetventils 4 diese Schließstellung auch immer dann einnehmen wird, wenn die Stromversorgung ausgefallen ist.

In Zuordnung zu dem Magnetventil 4 ist im Gehäuse 3 ein manuelles Betätigungselement 15 in Form eines Stößels 16 frei verschiebbar gelagert. Der Stößel 16 ist koaxial zum Anker 6 des Magnetventils 4 angeordnet und in eine Ruhelage auf einer Rückführfeder 17 abgestützt. An seinem aus dem Gehäuse 3 herausragenden Ende weist der Stößel 16 einen Betätigungsknopf 18 auf. Seine Lagerung und Durchführung durch das Gehäuse 3 ist mit Hilfe einer Dichtung 19 abgedichtet. Der Stößel 16 ist über einen vorgesehenen Hub verschiebbar, und zwar so, dass dieser Hub in den vorgesehenen Bewegungsweg des Ankers 6 des Magnetventils 4 eingreift. Die vorgesehene Überdeckung ist so bemessen, dass durch Drücken des Stößels 16 die Sperrstellung des Magnetventils 4 aufgehoben und eine Durchgangsstellung erreichbar ist, bei der der Anschluss 11 mit dem Ringraum 7 verbunden ist. Das Magnetventil 4 ist damit als 2/2-Wege-Magnetventil ausgebildet.

Auch das Magnetventil 5 weist einen Anker 20 auf, der von einem Ringraum 21 umgeben ist. Auch der Anker 20 ist auf einer Feder 22 abgestützt. Der Anker 20 des Magnetventils 5 besitzt zwei Ventilplatten 23 und 24, die an gegenüberliegenden Seiten des Ankers 20 angeordnet sind. Der Ventilplatte 23 ist gehäuseseitig ein Ventilsitz 25 zugeordnet. Der Ventilplatte 24 ist gehäuseseitig ein Ventilsitz 26 zugeordnet. Der Ventilsitz 26 hat über eine Verbindungsleitung 27 dauerhaft Verbindung zum Ringraum 7 des Magnetventils 4. Andererseits führt von dem Ringraum 21 über einen Anschluss 28 eine Leitung 29 zu den Luftfederbälgen 30, von denen hier systematisch nur einer dargestellt ist.

Dem Ventilsitz 25 ist ein Anschluss 31 zugeordnet, der hier als Entlüftungsanschluss in die Atmosphäre führt. Das Magnetventil 5 ist in seiner Ruhelage dargestellt, in der das zur Atmosphäre führende Auslassventil 23, 25 geschlossen und das Durchgangsventil 24, 26 geöffnet ist. Die beiden Magnetventile 4 und 5 sind damit in der Stellung STOPP dargestellt. Dies bedeutet, dass die elektronische Steuereinrichtung weder das Magnetventil 4 noch das Magnetventil 5 erregt hält, so dass beide Magnetventile 4, 5 die dargestellte Ruhelage einnehmen. Der Fahrzeugaufbau befindet sich in der vorgesehenen Höhe über den Achsen.

Auch dem Magnetventil 5 ist ein Betätigungselement 15 in Form eines Stößels 16 zugeordnet, der auf einer Rückführfeder 17 abgestützt ist und an seinem aus dem Gehäuse 3 herausragenden Ende einen Betätigungsknopf 18 aufweist. Auch dieser Stößel 16 ist mit Hilfe der Dichtung 19 abgedichtet und in Zuordnung zu dem Anker 20 des Magnetventils 5 koaxial zu diesem gelagert, wobei auch hier der Hub des manuell betätigbaren Stößels 16 den vorgesehenen Bewegungsweg des Ankers 20 des Magnetventils 5 überdeckt.

Aus der vorhergehenden Beschreibung ist bereits erkennbar, dass die beiden Betätigungselemente 15 für die Magnetventile 4 und 5 eine willkürliche manuelle Betätigung ermöglichen, und zwar auch dann, wenn die Stromzufuhr zu der elektrisch gesteuerten Niveauregeleinrichtung 1 unterbrochen ist. Zum willkürlichen Heben des Fahrzeugaufbaus, z. B. zum Zwecke einer Rampenanpassung der Ladeplattform des Fahrzeugaufbaus an die Rampe kann durch Drücken des Betätigungselements 15 des Magnetventils 4 der Fahrzeugaufbau angehoben werden. Das Einlassventil 9, 10 des Magnetventils 4 wird dabei geöffnet, so dass weitere Druckluft aus dem Vorratsbehälter 13 über die Leitung 12, den Anschluss 11, den Ringraum 7, die Verbindungsleitung 27, den Ringraum 21, den Anschluss 28 und die Leitung 29 zu den Luftfederbälgen 30 strömen kann. Muss dagegen der Fahrzeugaufbau für eine Rampenanpassung abgesenkt werden, so wird das Betätigungselement 15 des Magnetventils 5 eingedrückt, während das Betätigungselement 15 des Magnetventils 4 in seiner in Fig. 1 dargestellten Ruhelage verbleibt. Durch das Eindrücken des Stößels 16 wird das Auslassventil 23, 25 geöffnet, so dass Druckluft aus dem Luftfederbalg 30 über die Leitung 29, den Anschluss 28, das geöffnete Auslassventil 23, 25 und den Anschluss 31 in die Atmosphäre abströmen kann. Ist die vorgesehene Rampenanpassung erreicht, wird das jeweilige Betätigungselement 15 losgelassen, so dass wiederum eine Schließstellung, wie in Fig. 1 dargestellt, also entsprechend STOPP, erreicht wird.

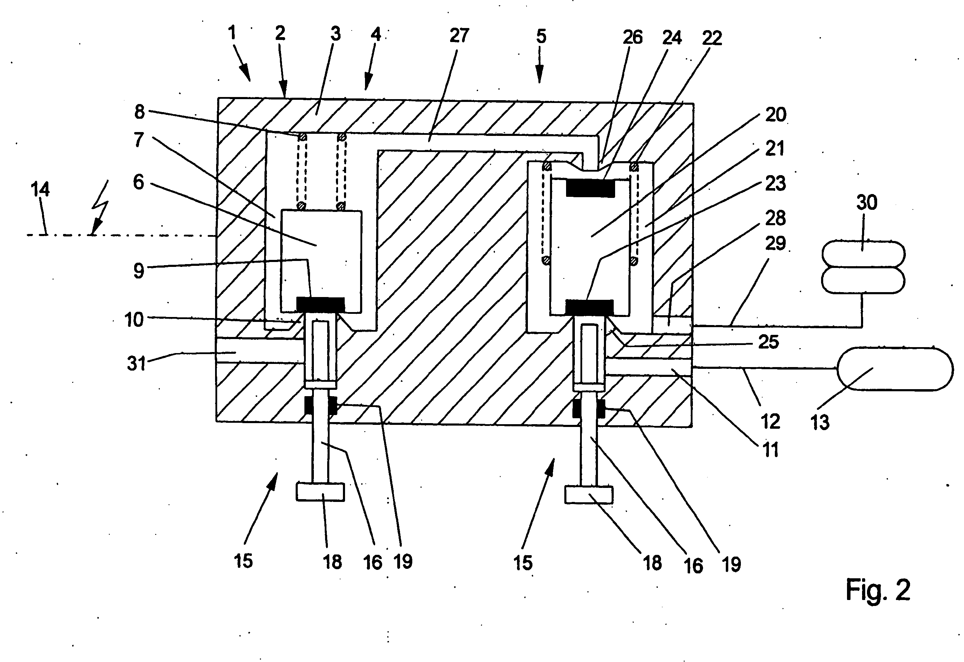

**Fig. 2** zeigt eine zweite Ausführungsform der Luftfederungseinrichtung. Auch hier sind die beiden Magnetventile 4 und 5 sowie die übrigen Elemente in vergleichbarer Weise wie in Fig. 1 vorgesehen und angeordnet. Fig. 2 soll nur verdeutlichen, dass der Anschluss des Vorratsbehälters 13 auch im Bereich des Magnetventils 5 vorgenommen werden kann, während der Anschluss 31, der zur Atmosphäre führt, dann im Bereich des Magnetventils 4 zu finden ist. Auch hier sind die Stößel 16 der jeweiligen Magnetventile 4 und 5 koaxial zu den Ankern 6 und 20 der Magnetventile 4 und 5 gelagert bzw. vorgesehen. Die Rückführfedern 17 können auch entfallen. Die entsprechende Rückführfunktion wird von den Federn 8 und 22 erbracht.

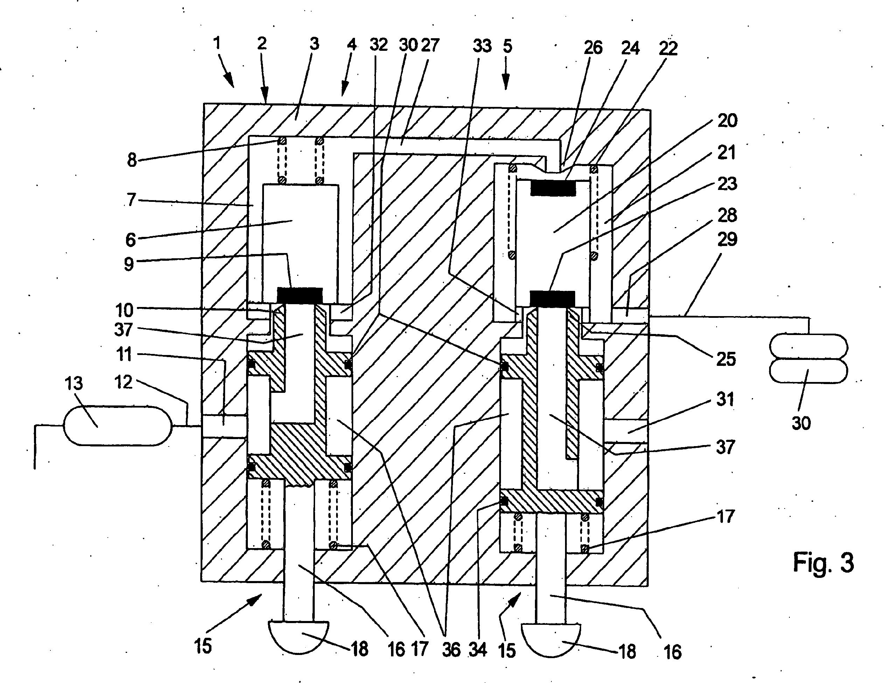

**Fig. 3** verdeutlicht eine weitere Ausführungsform der Luftfederungseinrichtung mit ihrer elektrisch betätigbaren Ventileinrichtung 2. Die elektrisch ansteuerbaren Magnetventil 4, 5 sind an sich weitgehend ähnlich aufgebaut und angeordnet, wie dies auch die Fig. 1 und 2 zeigen. Unterschiedlich ist hier lediglich, dass die Anker 6, 20 infolge der Kraft der Federn 8 bzw. 22 auf durchbrochene Rippen 32 und 33 angepresst werden. Weiterhin sind die Ventilsitze 10 und 25 nicht mehr gehäuseseitig vorgesehen, sondern im Bereich der freien Enden der Stößel 16 der Betätigungselemente 15 vorgesehen. Die Sitze 10 und 25 wirken aber weiterhin auch mit den Ventilplatten 9 und 23 der Anker 6 und 20 zusammen. Jeder Stößel 16 ist hier als Schieber ausgebildet und weist zwei Dichtungen 34 und 35 auf, zwischen denen ein Raum 36 gebildet ist, der kontinuierlich Verbindung zu einem Anschluss 11 bzw. 31 besitzt. Die Rückführfedern 17 sind hier im Inneren des Gehäuses 3 gelagert und belasten in der Ruhelage die Sitze 10, 25 gegen die jeweiligen Ventilplatten 9 und 23. Die Ventilsitze 10, 25 sind über einen Kanal 37 mit den Räumen 36 verbunden. Es ist erkennbar, dass die Stößel 16 der Betätigungselemente 15 hier durch Ziehen willkürlich manuell betätigbar sind. Die Rückführfedern 17 wirken hier in umgekehrter Richtung. Der Hub der Stößel 16 schließt hier unmittelbar an den Bewegungsweg des jeweiligen Ankers 6, 20 des jeweiligen Magnetventils 4, 5 an.

Auch mit der Ausführungsform gemäß Fig. 3 ist eine Leitungsverbindung möglich, wie sie für das andere Ausführungsbeispiel Fig. 2 zeigt.

### BEZUGSZEICHENLISTE

- 1: Niveauregeleinrichtung
- 2: Ventileinrichtung
- 3: Gehäuse
- 4: Magnetventil
- 5: Magnetventil
- 6: Anker
- 7: Ringraum
- 8: Feder
- 9: Dichtelement
- 10: Ventilsitz

- 21: Ringraum
- 22: Feder
- 23: Ventilplatte
- 24: Ventilplatte
- 25: Ventilsitz
- 26: Ventilsitz
- 27: Verbindungsleitung
- 28: Anschluss
- 29: Leitung
- 30: Luftfederbalg

- 11: Anschluss
- 12: Leitung
- 13: Druckluftvorratsbehälter
- 14: elektrische Steuerleitung
- 15: Betätigungselement
- 16: Stößel
- 17: Rückführfeder
- 18: Betätigungsknopf
- 19: Dichtung
- 20: Anker

- 31: Anschluss
- 32: Rippe
- 33: Rippe
- 34: Dichtung
- 35: Dichtung
- 36: Raum
- 37: Kanal

## Patentansprüche

1. Luftfederungseinrichtung für ein Kraftfahrzeug mit Luftfederbälgen, mit einer elektronisch gesteuerten Niveauregelungseinrichtung (1), welche über eine elektrisch betätigbare Ventileinrichtung (2) bei Bedarf ein Belüften oder Entlüften der Luftfederbälge (30) bewirkt, mit zwei in Reihe geschalteten Magnetventilen (4, 5) und mit zwei, den Magnetventilen zugeordneten manuellen Betätigungselementen (15), durch deren willkürliche manuelle Betätigung auch bei fehlender Stromversorgung der elektronisch gesteuerten Niveauregeleinrichtung (1) eine willkürliche Belüftung oder Entlüftung der Luftfederbälge (30) durchführbar ist, wobei jedes Betätigungselement (15) gegenüber den Ankern (6, 20) mechanisch ungekoppelt über einen Hub frei bewegbar angeordnet ist und der Hub jedes Betätigungselements (15) so bemessen und positioniert ist, dass er einen Teil des Bewegungswegs des jeweiligen Ankers (6, 20) überdeckt oder unmittelbar im Anschluss an den Bewegungsweg des jeweiligen Ankers beginnt, **dadurch gekennzeichnet, dass** die zwei Magnetventile (4, 5) der elektrisch betätigbaren Ventileinrichtung (2) als Ventilkörper ausgebildete, von Ringräumen (7, 21) umgebene Anker (6, 20) aufweisen, und dass das erste Magnetventil (4) der zwei in Reihe geschalteten Magnetventile (4, 5) als 2/2-Wegeventil und das zweite Magnetventil (5) als 3/2-Wege-Magnetventil mit Entlüftungsanschluss (31) ausgebildet sind.

2. Luftfederungseinrichtung nach Anspruch 1, **dadurch gekennzeichnet, dass** jedes Betätigungselement (15) als ein in einem gemeinsamen Gehäuse (3) aufgehängter Stößel (16) ausgebildet ist, der koaxial zur Achse des Ankers (6, 20) des jeweiligen Magnetventils (4, 5) verschiebbar gelagert ist.

3. Luftfederungseinrichtung nach Anspruch 2, **dadurch gekennzeichnet, dass** der Stößel (16) eine Rückführfeder (17) aufweist, die den Stößel (16) in eine Ruhelage beaufschlagt.

4. Luftfederungseinrichtung nach einem oder mehreren der Ansprüche 1 bis 3, **dadurch gekennzeichnet, dass** die Ringräume (7, 21) der beiden Magnetventile (4, 5) über eine Verbindungsleitung (27) dauerhaft miteinander verbunden sind.

5. Luftfederungseinrichtung nach einem der Ansprüche 1 bis 4, **dadurch gekennzeichnet, dass** der dem Anker (6, 20) des jeweiligen Magnetventils (4, 5) zugeordnete Stößel (16) einen Kanal (37) aufweist und im Anschluss an den Kanal (37) einen Ventilsitz (10, 25) trägt, der mit dem als Ventilkörper ausgebildeten Anker (6, 20) des jeweiligen Magnetventils (4, 5) ein Einlassventil oder ein Auslassventil bildet.

6. Luftfederungseinrichtung nach Anspruch 5, **dadurch gekennzeichnet, dass** der Stößel (16) als Schieber mit zwei Dichtungen (34, 35) ausgebildet ist und der Kanal (37) den Raum (36) zwischen den beiden Dichtungen (34, 35) mit dem Ventilsitz (10, 25) verbindet.

7. Luftfederungseinrichtung nach Anspruch 1 bis 6, **dadurch gekennzeichnet, dass** die Stößel (16) der beiden Magnetventile (4, 5) identisch ausgebildet sind.

8. Luftfederungseinrichtung nach Anspruch 1 bis 6, **dadurch gekennzeichnet, dass** jeder Stößel (16) einen aus dem Gehäuse (3) herausragenden Betätigungsknopf (18) aufweist.

## Claims

1. Pneumatic suspension unit for a vehicle including bellows, an electronically controlled level unit (1) for aerating or venting the bellows (30) by the use of an electrically operated valve unit (2) when necessary, two solenoid valves (4, 5) arranged in series and two manually operated actuation elements (15) assigned to the solenoid valves, the actuation elements when arbitrary operated also in case of failing current supply of the electronically controlled level unit (1) make it possible to arbitrary aerate or vent the bellows (30), each actuation element (15) being designed and arranged to be movable over a stroke mechanically uncoupled with respect to the armature bodies (6, 20), the stroke of each of the actuation elements (15) being designed and positioned to cover a part of the motion way of the respective armature body (6, 20) or to start directly subsequently to the motion way of the armature body, **characterized in that** the two solenoid valves (4, 5) of the electrically operated valve unit (2) include armature bodies (6, 20) being designed and arranged to be valve bodies and to be surrounded with ring chambers (7, 21), and **in that** the first solenoid valve (4) of the two solenoid valves (4, 5) being arranged in series is designed and arranged as a 2/2-port directional control valve and the second solenoid valve (5) being designed and arranged as a 3/2-port directional control valve having a vent opening (31).

2. The pneumatic suspension unit of claim 1, **characterized in that** each actuation element (15) is designed and arranged as a tappet (16) suspended in a common housing (3), the tappet being coaxially movable with respect to the axis of the armature bodies (6, 20) of the respective solenoid valve (4, 5).

3. Pneumatic suspension unit of claim 2, **characterized in that** the tappet (16) comprises a spring (17) biasing the tappet (16) versus a rest position.

4. Pneumatic suspension unit of one or more of the claims 1 to 3, **characterized in that** the ring chambers (7, 21) of the two armature body valves (4, 5) are permanently connected to each other via a connection conduit (27).

5. Pneumatic suspension unit of one of the claims 1 to 4, **characterized in that** the tappet (16) assigned to the armature body (6, 20) of the respective solenoid valve (4, 5) comprises a channel (37) and carries a valve seat (10, 25) arranged near the channel (37), the valve seat and the armature body (6, 20) building a valve body forming an inlet valve or an outlet valve.

6. Pneumatic suspension unit of claim 5, **characterized in that** the tappet (16) is designed and arranged to be a slider having two seals (34, 35) and **in that** the channel (37) connects the chamber (36) between the two seals (34, 35) with the valve seat (10, 25).

7. Pneumatic suspension unit of claim 1 to 6, **characterized in that** the tappets (16) of the two solenoid valves (4, 5) are designed to be identical.

8. Pneumatic suspension unit of claim 1 to 6, **characterized in that** each of the tappets (16) comprises a knob (18) protruding from the housing (3).

## Revendications

1. Suspension pneumatique pour un véhicule automobile avec des soufflets pneumatiques, comportant un dispositif de réglage de niveau (1) à commande électronique, qui provoque, si nécessaire, une admission d'air ou une purge d'air sur les soufflets pneumatiques (30) par l'intermédiaire d'un système de vannes (2) actionnable électriquement, avec deux vannes magnétiques (4, 5) montées en série et avec deux éléments d'actionnement (15) manuels, qui sont associés aux vannes magnétiques et dont la manoeuvre manuelle volontaire, même en l'absence d'alimentation en courant du dispositif de réglage de niveau (1) à commande électronique, permet d'effectuer une admission d'air ou purge d'air volontaire des soufflets pneumatiques (30), chaque élément d'actionnement (15) étant disposé de manière librement mobile sur une course en étant découplé mécaniquement par rapport à des induits (6, 20) et la course de chaque élément d'actionnement (15) étant dimensionnée et positionnée de telle sorte qu'elle couvre une partie de la trajectoire de déplacement de l'induit (6, 20) correspondant ou commence directement à la suite de la trajectoire de déplacement de l'induit correspondant, **caractérisée en ce que** les deux vannes magnétiques (4, 5) du système à vannes (2) actionnable électriquement comportent les induits (6, 20) entourés par des espaces annulaires (7, 21) et réalisées sous forme de corps de vanne, et **en ce que** la première vanne magnétique (4) des deux vannes magnétiques (4, 5) montées en série, est réalisée sous forme de vanne à 2/2 voies, et la deuxième vanne magnétique (5) est réalisée sous forme de vanne magnétique à 3/2 voies avec un raccord de purge d'air (31).

2. Suspension pneumatique selon la revendication 1, **caractérisée en ce que** chaque élément d'actionnement (15) est réalisé sous forme de poussoir (16), qui est suspendu à un boîtier (3) commun et qui est monté mobile coaxialement à l'axe de l'induit (6, 20) de la vanne magnétique (4, 5) correspondante.

3. Suspension pneumatique selon la revendication 2, **caractérisée en ce que** le poussoir (16) comporte un ressort de rappel (17), qui sollicite le poussoir (16) dans la position de repos.

4. Suspension pneumatique selon une ou plusieurs des revendications 1 à 3, **caractérisée en ce que** les espaces annulaires (7, 21) des deux vannes magnétiques (4, 5) sont reliés entre eux en continu via une conduite de liaison (27).

5. Suspension pneumatique selon l'une quelconque des revendications 1 à 4, **caractérisée en ce que** le poussoir (16), associé à l'induit (6, 20) de la vanne magnétique (4, 5) correspondante, comporte un conduit (37) et, dans le prolongement du conduit (37), porte un siège de vanne (10, 25) qui, conjointement avec l'induit (6, 20), réalisé sous forme de corps de vanne, de la vanne magnétique (4, 5) correspondante, forme une vanne d'admission ou une vanne de sortie.

6. Suspension pneumatique selon la revendication 5, **caractérisée en ce que** le poussoir (16) est réalisé sous forme de distributeur avec deux joints d'étanchéité (34, 35), et le conduit (37) fait communiquer l'espace (36) entre les deux joints d'étanchéité (34, 36) avec le siège de vanne (10, 25).

7. Suspension pneumatique selon l'une quelconque des revendications 1 à 6, **caractérisée en ce que** les poussoirs (16) des deux vannes magnétiques (4, 5) sont réalisés de manière identique.

8. Suspension pneumatique selon l'une quelconque des revendications 1 à 6, **caractérisée en ce que** chaque poussoir (16) comporte un bouton d'actionnement (18) s'avançant en saillie hors du boîtier (3).
